Europäisches Patentamt

European Patent Office

Office européen des brevets

(19)

(11) Veröffentlichungsnummer: **0 058 209**
**A1**

(12) # EUROPÄISCHE PATENTANMELDUNG

(21) Anmeldenummer: **81100983.6**

(22) Anmeldetag: **12.02.81**

(51) Int. Cl.³: **F 16 B 13/04**

(43) Veröffentlichungstag der Anmeldung:
**25.08.82 Patentblatt 82/34**

(84) Benannte Vertragsstaaten:
**BE DE FR GB SE**

(71) Anmelder: **Wunsch, Ole**
**Thorsvej 6 Thorkildstrup**
**DK-4060 Kirke Saaby(DK)**

(72) Erfinder: **Wunsch, Ole**
**Thorsvej 6 Thorkildstrup**
**DK-4060 Kirke Saaby(DK)**

(74) Vertreter: **Koepsell, Helmut, Dipl.-Ing.**
**Mittelstrasse 7**
**D-5000 Köln 1(DE)**

(54) **Expansionsdübel.**

(57) Ein Verbindungselement in Form eines Expansionsdübels besteht aus einem zylindrischen Rohr (2) und zwei damit
zusammenwirkenden Keileinsätzen (1), die bei der Einführung in die Endabschnitte des zylindrischen Rohres diese
expandieren. Das zylindrische Rohr (2) ist an jedem Ende in
vier gleich grosse Segmente (4) unterteilt. Zwei einander
gegenüberliegende Seitenflächen der Keileinsätze (1) verlaufen zueinander parallel, so dass sich die Endabschnitte des
zylindrischen Rohres (2) bei der Einführung der Keileinsätze
(1) nur in einer Ebene erweitern mit dem Ergebnis, dass die
miteinander zu verbindenden Werkstücke, an denen der
Dübel bzw. dessen Segmente angreifen, keine unzulässigen
Beanspruchungen erfahren, insbesondere nicht gespalten
werden. Jeder Keileinsatz ist in unterschiedlichen, um 90°
gegeneinander versetzte Positionen in das Rohr eintreibbar.

*Fig. 1*

**0058209**

**DIPL.-ING. HELMUT KOEPSELL**
PATENTANWALT

5 KÖLN 1 , 3. 2. 1981
Mittelstrasse 7
Telefon (02 21) 21 94 23
Telegrammadresse: Koepsellpatent Köln

Ole Wunsch

| Wn/301 |
Reg.-Nr. bitte angeben

## Expansionsdübel

Die Erfindung betrifft einen Expansionsdübel mit richtungsbestimmter Expansion, bestehend aus einem im wesentlichen
zylindrischen Rohr und wenigstens einem Keileinsatz, der
ganz oder teilweise in das zylindrische Rohr einführbar ist
und wenigstens einen Teilabschnitt des zylindrischen Rohres zur
in nur einer Ebene bringt.                     Aufweitung

Bei Verwendung derartiger Dübel in dünnen Platten kann die
Spaltung des Plattenmaterials vermieden werden, wenn die
Richtung bzw. Richtungen, in welcher die Expansion verläuft
bzw. verlaufen, in die Ebene der Platte gelegt wird bzw. werden.

Derartige Dübel sind aus den US-PSen 3 954 345 und 1 726 362
sowie der FR-PS 915 419 bekannt.

Der Erfindung liegt die Aufgabe zugrunde, einen Expansionsdübel der eingangs beschriebenen Art so auszugestalten, dass man
die Richtung(en) bzw. die Ebene, in welcher der Dübel aufgeweitet wird, an jedem Ende des Dübels wählen kann, und zwar in
Unabhängigkeit von der Richtung bzw. Ebene am jeweils anderen
Ende.

Zur Lösung dieser Aufgabe schlägt die Erfindung vor, dass das
Ende oder die Enden des zylindrischen Rohres in mindestens
vier, vorzugsweise gleich grosse Segmente, vorzugsweise durch
radiale Schnitte aufgeteilt ist bzw. sind und zwei einander
gegenüberliegende Seitenflächen des Keileinsatzes bzw. der Keileinsätze zueinander parallel verlaufen. Das bedeutet, dass durch die Wahl der Position des Keiles, bezogen auf den Umfang des Rohres , die Ebene bzw. Richtung bestimmt werden kann, in welcher der Dübel aufgeweitet wird. Dies ist darauf zurückzuführen, dass an den den beiden zueinander parallelen Seitenflächen zugeordneten Bereichen des Umfanges des Rohres eine Aufweitung des letzteren nicht oder nur in einem nicht ins Gewicht fallenden Masse eintritt.

Als besonders vorteilhaft hat sich eine Ausführungsform herausgestellt, bei welcher jeder Keileinsatz an seinem die kleinste Querschnittsfläche aufweisenden Ende die Form eines Prisma mit quadratischem Querschnitt hat, dessen Querschnittsabmessungen so gewählt sind, dass das Prisma engpassend, ggf. mit einer geringen Presspassung in das jeweils zugehörige Ende des Rohres eingesteckt ist, wobei die vier Kanten des Prismas den vier radialen Schnitten im zugehörigen Endabschnitt des Rohres zugeordnet sind.

Auf diese Weise kann jeder Keileinsatz ohne Schwierigkeiten genau in einer bestimmten Position, die einer bestimmten Expansionsrichtung entspricht oder einer dazu rechtwinkligen Position, im Endabschnitt des Rohres fixiert werden.

Der Endabschnitt bzw. die Endabschnitte des Rohres können im Bereich der radialen Schnitte mit im Profil widerhakenartig begrenzten Rillen oder Nuten versehen sein.

Der Dübel gemäss der Erfindung besteht normalerweise aus Metall, wobei sich Aluminium sowohl für das Rohr als auch für die Keileinsätze als gut geeignet erwiesen hat.

Zum Verbinden zweier Werkstücke wird jedes mit einer Bohrung versehen, innerhalb derer sich ein Anschlag befindet. Dies kann in einfacher Weise dadurch erreicht werden, dass das Werkstück nicht durchbohrt, sondern lediglich mit einer Ausbohrung versehen wird, die in ihrem Tiefsten durch das stehen gebliebene Material begrenzt wird. Die Gesamttiefe der beiden Ausbohrungen bzw. der Gesamtabstand zwischen den beiden Anschlägen in den Bohrungen ist wenig grösser als die Länge des zylindrischen Rohres, jedoch geringer als dem Abstand zwischen den einander abgekehrten Stirnflächen der keilförmigen Einsätze entspricht, solange letztere ihre Anfangsposition im Rohr, also vor Beginn des Wirksamwerdens der Expansion, einnehmen. Die Durchmesser der Bohrungen in den Werkstücken entsprechen etwa dem Aussendurchmesser des Zylinders bzw. der grössten Querabmessung des keilförmigen Einsatzes.

An jedem Ende des zylindrischen Rohres wird ein Keileinsatz derart eingesetzt, dass das prismaförmige Ende in seiner Ausgangsposition mit seinen vier Kanten in den vier radialen Schnitten jeweils zugehörigen Endabschnitt des Rohres festgehalten wird, und zwar gegebenenfalls unter einer geringfügigen Vorspannung der von den Schnitten begrenzten Segmente.

Durch die Wahl der Position des Keileinsatzes kann der Benutzer bestimmen, in welcher Ebene bzw. in welchen Richtungen sich der Dübel erweitern soll, d. h. entweder parallel zur Ebene oder Richtung der Aufweitung am anderen Ende oder senkrecht dazu.

Zur Herstellung der Verbindung zwischen den beiden Werkstücken wird der Dübel in die an den Werkstücken angebrachten, einander gegenüberliegenden und im wesentlichen miteinander fluchtenden Bohrungen eingebracht, wobei die Keileinsätze die jeweils gewünschte Richtung einnehmen. Aufgrund der vorbeschriebenen Relation zwischen der Gesamttiefe beider Bohrungen und dem Abstand zwischen den beiden einander abgekehrten Stirnflächen der beiden Keileinsätze des Dübels können die beiden Werkstücke nur unter Belassung eines Abstandes unter Einschluss des Dübels zusammengefügt werden, solange die Keileinsätze noch ihre Ausgangslage einnehmen. Eine Verringerung dieses Abstandes durch Zusammendrücken oder Zusammenschlagen der beiden Werkstücke hat zwangsläufig zur Folge, dass die die Bohrungen jeweils innenseitig begrenzenden Anschläge, also normalerweise die Böden der Bohrungen, gegen die rechteckigen Stirnflächen der Keileinsätze zur Anlage kommen und bei Aufrechterhaltung des Druckes jeden Keileinsatz in den jeweils zugehörigen Rohrabschnitt eindrücken mit dem Ergebnis, dass an jedem Rohrende zwei einander gegenüberliegende Segmente in die Wandung der Bohrung in der Nähe des Bodens desselben oder eines anderen, als Anschlag bewirkenden Teiles, gepresst werden, so dass aufgrund des Vorhandenseins der widerhakenförmig begrenzten Rillen oder Nuten eine formschlüssige Verbindung zwischen der Wandung der Bohrung einerseits und den nach aussen abgebogenen Segmenten entsteht. Auf diese Weise werden die Werkstücke fest miteinander verbunden.

Es wird somit erreicht, dass der Dübel gemäss der Erfindung sich nur in der vom Benutzer an jedem Ende des Rohres gewählten Ebene oder Richtung erweitert. Der Dübel kann somit z. B. an der Kante dünner Platten oder anderer dünnwandiger Materialien benutzt werden, ohne dass diese beim Herstellen des Verbundes durch Gegeneinanderdrücken oder Zusammenschlagen gespalten oder sonstwie unbrauchbar gemacht werden. Vielmehr besteht die Möglichkeit, den Dübel bzw. den jeweils zugehörigen Keileinsatz so einzusetzen, dass ein Aufweiten des Dübels nur in einer Ebene oder in Richtungen erfolgt, in denen die von den aufgeweiteten bzw. abgebogenen Segmente ausgeübten Kräfte ohne weiteres vom Werkstück aufgenommen werden können. Dies bedeutet, dass z. B. Möbel, Bauinventar und viele andere Konstruktionen und Konstruktionsteile als Einzelteile in noch nicht zusammengefügtem Zustand, gelagert und transportiert werden können und erst danach zu den erwünschten Konstruktionen, Verbänden oder dgl. bequem und schnell durch einfaches Zusammenschlagen zusammengefügt werden können.

Der Dübel gemäss der Erfindung ist nicht zuletzt aufgrund seiner Einfachheit auch ohne weiteres im Rahmen von "do it yourself" - Systemen verwendbar, um Teile zusammenzufügen.

Darüber hinaus ist der Dübel auch für das Zusammenfügen von aus Einzelelementen hergestellten Bauelementen geeignet. Letztere können z. B. als Sandwich-Konstruktion mit einem isolierenden Kern zwischen tragenden, aber relativ dünnen Platten ausgebildet sein. Die nach oben oder unten weisenden, ggf. auch die seitlichen Kanten der Platten, sind mit einer Anzahl nach einem bestimmten Muster angeordneter Bohrungen im vorbeschriebenen Sinne versehen, die das Bauen mit diesen Elementen in unterschiedlichen Verbänden und Anordnungen erlauben.

Bei Verwendung des Dübels gemäss der Erfindung können die Keileinsätze gemäss der jeweils gewünschten Expansionsrichtung eingesetzt und in die für den jeweils herzustellenden Verband passenden Bohrungen eingesetzt werden, worauf die Blöcke oder Elemente zur Bildung grösserer Einheiten zusammengedrückt oder -geschlagen werden. Dabei entstehen in der bereits beschriebenen Weise die Verbindungen zwischen den zusammenzufügenden Bauteilen.

In der Zeichnung ist ein Ausführungsbeispiel der Erfindung dargestellt. Es zeigen:

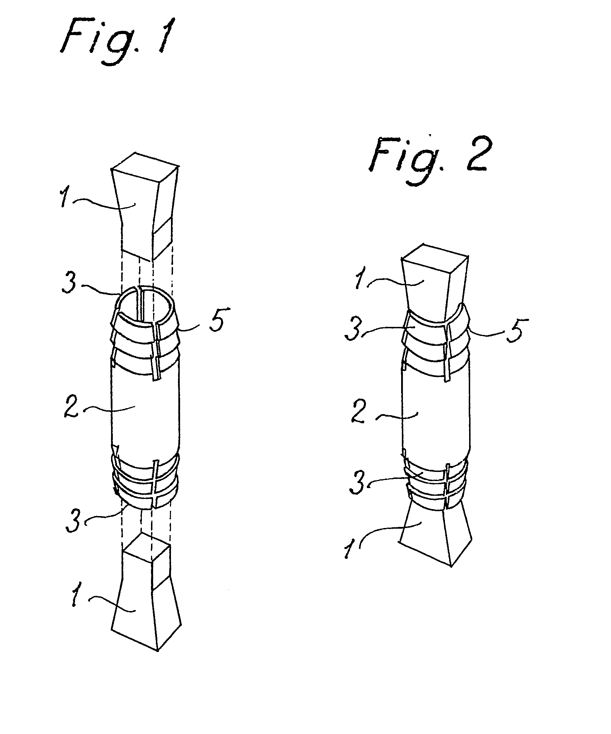

Fig. 1     in perspektivischer Ansicht einen Dübel, der aus einem zylindrischen Rohr und zwei gleichen Keileinsätzen besteht, wobei die Teile auseinandergezogen dargestellt sind und die Keileinsätze so angebracht sind, dass der Dübel an beiden Endabschnitten in derselben Ebene aufgeweitet wird,

Fig. 2     in perspektivischer Ansicht den Dübel gemäss Fig.1 in zusammengesetztem Zustand der Teile.

Der in der Zeichnung dargestellte Dübel besteht aus zwei gleichen Keileinsätzen 1 und einem im wesentlichen zylindrischen Rohr 2, dessen Endabschnitte durch radiale Einschnitte 4 in vier gleich grosse Segmente 3 unterteilt sind. An den Enden des zylindrischen Rohres sind jeweils aussenseitig widerhakenartig begrenzte Nuten 5 vorgesehen. Die Keileinsätze 1, deren einander gegenüberliegende Seitenflächen zueinander parallel verlaufen, sind an dem den kleinsten Querschnitt aufweisenden Ende als Prisma mit quadratischem Querschnitt ausgebildet. Die Teile sind dabei so bemessen, dass das Prisma engpassend in das jeweils zugehörige Ende des Rohres 2 eingeschoben wird, wobei seine vier Kanten 6 den vier radialen Einschnitten 4 zugeordnet sind und in diese Einschnitte gegebenenfalls etwas eingreifen. Aufgrund einer geringen Klemmwirkung zwischen Endabschnitt und zugeordnetem Keileinsatz 1 bleibt letzterer normalerweise mit dem Rohr verbunden. Andererseits ist die Klemmwirkung nur so gering, dass es ohne weiteres möglich ist, den Keileinsatz herauszuziehen und wieder, beispielsweise um 90° verdreht, in das Rohr einzustecken. Aufgrund des Vorhandenseins der vier Einschnitte 4 weisen die von diesen begrenzten Segmente 3 normalerweise eine geringe elastische Verformbarkeit auf, die den vorbeschriebenen Effekt begünstigt.

Bei der in der Zeichnung dargestellten Ausführungsform weist der Dübel an beiden Enden einen Keileinsatz 1 auf. Es ist jedoch auch möglich, dass nur das eine Ende des Dübels aufweitbar ausgebildet ist, wohingegen das andere Ende einem anderen Zwecke dient.

Patentansprüche:

1. Expansionsdübel mit richtungsbestimmter Expansion, bestehend aus einem im wesentlichen zylindrischen Rohr (2) und Keileinsätzen (1), die ganz oder teilweise in das zylindrische Rohr (2) einführbar sind und wenigstens einen Teilabschnitt des zylindrischen Rohres in nur einer Ebene aufweiten können, dadurch gekennzeichnet, dass das Ende oder die Enden des zylindrischen Rohres (2) in mindestens vier, vorzugsweise gleich grosse Segmente (3), vorzugsweise durch radiale Einschnitte (4) unterteilt ist bzw. sind und zwei einander gegenüberliegende Seitenflächen des Keileinsatzes bzw. der Keileinsätze (1) zueinander parallel verlaufen.

2. Expansionsdübel nach Anspruch 1, dadurch gekennzeichnet, dass jeder Keileinsatz (1) an seinem Ende kleinsten Querschnittes die Form eines Prismas mit quadratischem Querschnitt hat, dessen Abmessungen so gewählt sind, dass das Prisma engpassend in ein Ende des Rohres einsteckbar ist, wobei die vier Kanten des Prismas den vier radialen Einschnitten zugeordnet sind bzw. in diese eingreifen.

1|1

Fig. 1

Fig. 2

0058209

Nummer der Anmeldung

EP 81 10 0983.6

## Europäisches Patentamt

# EUROPÄISCHER RECHERCHENBERICHT

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| Y | DD – A – 82 849 (FISCHER) <br> * Spalte 7, Zeilen 8,9; Fig. 5 * | | 1,2 | F 16 B 13/04 |
| Y | FR – A – 518 531 (PETZET et al.) <br> * Fig. 2,4 * | | 1,2 | |
| Y | FR – A – 1 598 931 (STE INTERMETALLUR-GIE) <br> * Fig. 2 * | | 1,2 | |
| Y | FR – A – 2 147 575 (AUTHIER) <br> * Fig. 7 * | | 1,2 | **RECHERCHIERTE SACHGEBIETE (Int. Cl.³)** |
| Y | AU – B – 60 773/65 (SINCLAIR) <br> * Fig. 4 * | | 1,2 | F 16 B 13/04 <br> F 16 B 13/06 <br> F 16 B 13/08 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 12-01-1982 | ZAPP |

EPA form 1503.1  06.78